(19) Europäisches Patentamt
European Patent Office
Office européen des brevets

(11) Numéro de publication : 0 327 424 B1

(12) # FASCICULE DE BREVET EUROPEEN

(45) Date de publication du fascicule du brevet : **12.08.92 Bulletin 92/33**

(51) Int. Cl.$^5$ : **C08G 63/91,** C10L 1/24

(21) Numéro de dépôt : **89400182.5**

(22) Date de dépôt : **23.01.89**

(54) **Polymères dérivés de polyesters insaturés par addition de composés à fonction thiol et leur utilisation comme additifs de modification des propriétés à froid de distillats moyens de pétrole.**

(30) Priorité : **04.02.88 FR 8801424**

(43) Date de publication de la demande : **09.08.89 Bulletin 89/32**

(45) Mention de la délivrance du brevet : **12.08.92 Bulletin 92/33**

(84) Etats contractants désignés : **BE CH DE ES GB IT LI NL SE**

(56) Documents cités :
**EP-A- 0 060 505**
**EP-A- 0 115 072**
**BE-A- 759 191**
**US-A- 2 813 086**
**US-A- 3 959 103**
**US-A- 4 135 887**
**US-A- 4 380 498**
**US-A- 4 485 044**

(56) Documents cités :
**DIE MAKROMOLEKULARE CHEMIE, vol. 97, no. 2156, 1966, pages 258-266, Hüthig & Wepf Verlag, Basel, CH; A.A. OSWALD et al.:"Organic sulfur compounds. XIX. Addition of dithiols to diallyl maleate: A new concept of polyester synthesis"**

(73) Titulaire : **INSTITUT FRANCAIS DU PETROLE**
**4, Avenue de Bois Préau**
**F-92502 Rueil-Malmaison (FR)**
Titulaire : **ELF FRANCE**
**2 place de la Coupole La Défense 6**
**F-92400 Courbevoie (FR)**

(72) Inventeur : **Garapon, Jacques**
**64, Rue des Aqueducs**
**F-69005 Lyon (FR)**
Inventeur : **Touet, Rémi**
**Résidence Mutualiste Le Fontanil**
**F-38120 Saint Egrève (FR)**
Inventeur : **Damin, Bernard**
**162, Grande Rue**
**F-69600 Oullins (FR)**
Inventeur : **Debled, Béatrice**
**59 Boulevard Réguillon**
**F-69100 Villeurbanne (FR)**

**EP 0 327 424 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des polymères modifiés comportant des groupements latéraux thiosubstitués dérivés de composés comportant une fonction thiol.

Les polymères de la présente invention sont en particulier utilisables comme additifs permettant l'amélioration des propriétés d'écoulement à froid des distillats moyens de pétrole (fuels et gazoles).

Les polymères modifiés de la présente invention résultent de la réaction d'au moins un composé à fonction thiol répondant à l'une des formules générales (I) ou (II) décrites ci-après, sur un polymère de condensation (polyester insaturé), résultant de la condensation d'au moins un époxyde aliphatique (dénommé ci-après composé époxydé) sur au moins un composé aliphatique insaturé dicarboxylique, de préférence vicinal, comportant au moins une insaturation éthylénique en alpha de l'un des groupes carboxyliques (dénommé ci-après composé dicarboxylique) et ayant habituellement de 4 à 60 atomes de carbone, de préférence de 4 à 30 atomes de carbone et le plus souvent de 4 à 8 atomes de carbone dans sa molécule.

Les polymères de condensation résultant de la condensation d'au moins un composé monoépoxydé sur au moins un composé dicarboxylique sont des composés décrits dans l'art antérieur et connus, pour certains d'entre eux, comme additifs ayant une action sur le point d'écoulement des pétroles bruts et des fuel-oils (US-A-4135887).

De façon surprenante, on a découvert que les composés de la présente invention sont des additifs permettant une amélioration plus importante des propriétés d'écoulement à froid des distillats moyens d'hydrocarbures que celle obtenue avec la plupart des additifs préconisés dans l'art antérieur.

Les polymères de condensation servant à préparer les polymères modifiés de la présente invention sont obtenus par les méthodes classiques de préparation des polymères de condensation bien connues de l'homme du métier.

Le composé dicarboxylique que l'on emploie dans la présente invention est habituellement, de préférence, un composé monoinsaturé de 4 à 8 atomes de carbone par molécule, par exemple l'acide maléique, l'acide fumarique, l'acide itaconique, l'acide citraconique et l'acide mésaconique.

Le composé dicarboxylique est de préférence un anhydride cyclique monoinsaturé tel que par exemple l'anhydride maléique, les anhydrides alkylmaléiques et les anhydrides alcényl-succiniques.

Dans le cadre de l'invention, les anhydrides préférés sont l'anhydride maléique, l'anhydride citraconique (méthylmaléique) et l'anhydride itaconique (méthylène-succinique).

Le composé époxydé utilisé dans le cadre de l'invention est un composé ayant habituellement de 2 à 62 atomes de carbone, de préférence de 2 à 40 atomes de carbone, le plus souvent de 6 à 40 atomes de carbone et avantageusement de 8 à 40 atomes de carbone dans sa molécule.

Dans le cadre de la présente invention on utilise de préférence des composés monoépoxydés ou des mélanges de composés époxydés comprenant habituellement une proportion d'au moins 50 % en mole de composés monoépoxydés et contenant des composés comprenant plusieurs groupes époxydes dans leur molécule par exemple deux ou trois groupes époxydes. La proportion molaire de ces composés, dénommés composés polyépoxydés, dans le mélange des composés époxydés est habituellement inférieure à 50 %, de préférence inférieure à 40 % et de manière avantageuse inférieure à 30 %.

Les composés monoépoxydés aliphatiques utilisés dans la présente invention répondent habituellement à la formule générale suivante :

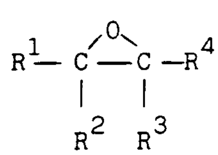

dans laquelle $R^1$ et $R^3$, identiques ou différents, représentent chacun un atome d'hydrogène ou un groupe alkyle inférieur ayant par exemple de 1 à 4 atomes de carbone, tel que méthyle, éthyle, propyles et butyles ; $R^2$ et $R^4$, identiques ou différents, représentent chacun un atome d'hydrogène, un groupe alkyle, de préférence sensiblement linéaire, ayant de 1 à 60 atomes de carbone, de préférence de 1 à 38 atomes de carbone et plus particulièrement de 4 à 38 atomes de carbone, un groupe alkoxyalkyle de formule $R^5$-O-$R^6$ dans laquelle $R^5$ représente un groupe alkyle, de préférence sensiblement linéaire, ayant de 1 à 59 atomes de carbone, de préférence de 1 à 37 atomes de carbone et plus particulièrement de 1 à 25 atomes de carbone et $R^6$ représente un groupe alkylène, de préférence sensiblement linéaire, ayant de 1 à 59 atomes de carbone, de préférence de 1 à 37 atomes de carbone, la somme des atomes de carbone de $R^5$ et $R^6$ étant habituellement de 2 à 60, de préférence de 2 à 38 et plus particulièrement de 4 à 38.

Dans la formule du composé monoépoxydé, décrite ci-avant, $R^2$ peut également représenter un groupe alkoxycarbonylalkylène de formule

$$R^5-\underset{\underset{O}{\|}}{C}-O-R^6-$$

ou un groupe alkylcarbonyloxyalkylène de formule

$$R^5-O-\underset{\underset{O}{\|}}{C}-R^6-$$

dans lesquelles $R^5$ et $R^6$ ont la définition donnée ci-avant. Les composés monoépoxydés préférés sont ceux dans lesquels $R^1$ et $R^3$ représentent chacun un atome d'hydrogène, ainsi que ceux dans lesquels $R^1$, $R^3$ et $R^4$ représentent chacun un atome d'hydrogène.

A titre d'exemples de composés monoépoxydés préférés on peut citer les composés dans lesquels $R^1$, $R^3$ et $R^4$ représentent chacun un atome d'hydrogène et $R^2$ représente un groupe alkyle sensiblement linéaire ayant de 6 à 38 atomes de carbone ; un groupe alkoxyalkyle, sensiblement linéaire, de formule $R^5$-O-$R^6$-, un groupe alkoxycarbonylalkylène, sensiblement linéaire, de formule

$$R^5-O-\underset{\underset{O}{\|}}{C}-R^6-,$$

ou un groupe alkylcarbonyloxyalkylène, sensiblement linéaire, de formule

$$R^5-\underset{\underset{O}{\|}}{C}-O-R^6-$$

dans lesquelles $R^5$ représente un groupe alkyle, sensiblement linéaire, ayant de 1 à 37 atomes de carbone et de préférence de 1 à 25 atomes de carbone et $R^6$ représente un groupe alkylène, sensiblement linéaire, ayant de 1 à 37 atomes de carbone et de préférence de 5 à 37 atomes de carbone dans le cas du groupe alkoxycarbonylalkylène, la somme des atomes de carbone de $R^5$ et $R^6$ étant de préférence de 6 à 38.

A titre d'exemples de composés monoépoxydés préférés on peut également citer les composés dans lesquels $R^1$ et $R^3$ représentent chacun un atome d'hydrogène et $R^2$ et $R^4$, identiques ou différents, représentent chacun un atome d'hydrogène ou un groupe alkyle, sensiblement linéaire, ayant de 1 à 60 atomes de carbone, de préférence de 1 à 38 atomes de carbone (monoépoxyalkane sensiblement linéaire), ainsi que les composés dans lesquels $R^4$ représente un atome d'hydrogène ou un groupe alkyle, sensiblement linéaire, tel que défini ci-avant et $R^2$ représente un groupe alkoxycarbonylalkylène tel que défini ci-avant.

A titre d'exemples spécifiques de composés monoépoxydés aliphatiques on peut citer :
l'oxyde d'éthylène, l'oxyde de propylène, l'époxy-1,2 butane, l'époxy-1,2 pentane, l'époxy-1,2 hexane, l'époxy-1,2 heptane, l'époxy-1,2 octane, l'époxy-1,2 nonane, l'époxy-1,2 décane, l'époxy-1,2 undécane, l'époxy-1,2 dodécane, l'époxy-1,2 tétradécane, l'époxy-1,2 pentadécane, l'époxy-1,2 hexadécane, l'époxy-1,2 heptadécane, l'époxy-1,2 octadécane, l'époxy-1,2 nonadécane, l'époxy-1,2 eicosane, l'époxy-1,2 docosane, l'époxy-1,2 tétracosane, l'époxy-1,2 hexacosane, les polybutènes époxydés de masse moléculaire moyenne (Mn) comprise entre environ 100 et environ 1 000, l'époxy-2,3 butane, l'époxy-2,3 pentane, l'époxy-2,3 hexane, l'époxy-3,4 heptane, l'époxy-2,3 octane, l'époxy-3,4 octane, l'époxy-3,4 décane, l'époxy-9,10 octadécane, l'éthoxy-3 époxy-1,2 propane, le propoxy-3 époxy-1,2 propane, le butoxy-3 époxy-1,2 propane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, l'acétoxy-1 époxy-2,3 propane, le butyryloxy-1 époxy-2,3 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemple méthylique, éthylique, propyliques, butyliques, éthyl-2 hexylique et hexadécyliques des acides époxy-3,4 butanoïque, époxy-4,5 pentanoïque, époxy-3,4 nonanoïque, époxy-10,11 undécanoïque, époxy-6,7 octadécanoïque, époxy-12,13 octadécanoïque, époxy-11,12 octadécanoïque, époxy-9,10 octadécanoïque, époxy-11,12 eicosanoïque et époxy-13,14 docosanoïque.

A titre d'exemples spécifiques de mélange de composés époxydés comprenant des polyépoxydes on peut citer le mélange d'esters alkyliques obtenu par estérification d'un mélange d'époxyacides résultant de l'époxydation d'un mélange d'acides gras éthyléniquement insaturés.

Le mélange d'acides gras éthyléniquement insaturé est par exemple un mélange comportant, en proportions pondérales approximatives données dans le tableau (I) ci-après, des acides ayant de 12 à 20 atomes de carbone dans leur molécule et contenant des acides saturés et insaturés. Ce mélange est habituellement dénommé oléine.

Tableau I

| ACIDES | $C_{12}^{*}$ | $C_{14}^{*}$ | $C_{14.1}$ | $C_{15}^{*}$ | $C_{16}^{*}$ | $C_{16.1}$ | $C_{17.1}$ | $C_{18}^{*}$ | $C_{18.1}$ | $C_{18.2}$ | $C_{18.3}$ | $C_{20.1}$ |
|---|---|---|---|---|---|---|---|---|---|---|---|---|
| %Poids | 0,8 | 2,7 | 1,0 | 0,5 | 5,0 | 5,5 | 1,5 | 1,5 | 68,0 | 10,0 | 2,5 | 1,0 |

* acides saturés

Dans le tableau I ci-avant $C_{p.1}$ désigne des acides comportant une insaturation éthylénique, $C_{p.2}$ désigne des acides comportant 2 insaturations éthyléniques et $C_{p.3}$ désigne des acides comportant 3 insaturations éthyléniques (p est le nombre d'atomes de carbone).

Pour l'estérification du mélange d'époxyacides on utilise, par exemple un mélange d'alcools comprenant en proportion pondérales approximatives 95 % d'alcool n-hexadécylique, 3 % d'alcool n-octadécyclique et 2 % d'alcools ayant plus de 18 atomes de carbone dans leur molécule.

Le polyester insaturé est habituellement obtenu en faisant réagir au moins un composé dicarboxylique (tel que défini ci-dessus) avec au moins un composé époxydé (tel que défini ci-dessus) en présence d'un catalyseur de condensation, par exemple un acide fort ou un sel de titane par exemple un titanate d'alkyle en particulier le titanate de n-butyle.

La condensation entre au moins un composé dicarboxylique et au moins un composé époxydé peut être effectuée en présence ou en absence de solvant. On peut par exemple utiliser un solvant hydrocarboné tel que le benzène, l'hexane, le cyclohexane, le toluène, le xylène ou un mélange d'hydrocarbures tel que par exemple une coupe hydrocarbonée à point d'ébullition élevé telle qu'un kérosène ou un gazole.

La réaction de condensation est habituellement effectuée à une température d'environ 30 à 200 °C et de préférence d'environ 50 à 160 °C pendant environ 30 minutes à environ 30 heures et de préférence pendant environ 2 heures à environ 15 heures.

La condensation entre le composé dicarboxylique et le composé époxydé est effectuée en employant des quantités de chacun de ces composés telles que le rapport molaire composé époxydé/composé dicarboxylique soit habituellement d'environ 0,4:1 à 1,8:1 et de préférence d'environ 0,8:1 à environ 1,2:1 et plus particulièrement d'environ 0,9:1 à environ 1,1:1.

Le polyester insaturé, ainsi obtenu, est ensuite mis en réaction avec au moins un composé à fonction thiol tel que défini ci-après. La réaction est habituellement effectuée en présence d'un solvant qui peut être identique ou différent de celui utilisé dans l'étape de préparation du polyester insaturé.

Lorsque le solvant utilisé dans cette réaction d'addition du composé à fonction thiol est le même que celui employé lors de la formation du polyester, il est possible de ne pas isoler le polyester et d'effectuer la réaction sur le produit brut de polycondensation, éventuellement après avoir enlevé le catalyseur employé pour la polycondensation.

Lorsque la polycondensation a été effectuée sans employer de solvant, le polyester est de préférence d'abord dissous avec une quantité de solvant représentant généralement en poids le poids du polyester formé, puis on effectue la réaction d'addition avec le composé à fonction thiol.

Les composés à fonction thiol que l'on utilise répondent à l'une des formules générales suivantes :

(I) $R^7\text{-}\underset{\displaystyle R^8}{\underset{|}{CH}}\text{-}SH$ et (II) $HS\text{-}CH_2\text{-}(R^9)_n\text{-}COOR^{10}$

dans lesquelles $R^7$ représente un atome d'hydrogène ou un groupe alkyle, de préférence sensiblement linéaire, ayant de 1 à 59 atomes de carbone, de préférence de 4 à 29 atomes de carbone et le plus souvent de 5 à 24 atomes de carbone, $R^8$ représente un atome d'hydrogène ou un groupe alkyle inférieur ayant par exemple de 1 à 4 atomes de carbone et de préférence un atome d'hydrogène ou un groupe méthyle ou éthyle, $R^9$ représente un groupe alkylène, de préférence sensiblement linéaire, ayant de 1 à 57 atomes de carbone et de préférence de 1 à 27 atomes de carbone, n est zéro ou un et $R^{10}$ représente un groupe alkyle, de préférence sensiblement linéaire, ayant de 1 à 58 atomes de carbone, de préférence de 1 à 28 atomes de carbone et le plus souvent de 1 à 24 atomes de carbone.

Les composés à fonction thiol que l'on utilise habituellement comprennent de 1 à 60 atomes de carbone, de préférence de 5 à 30 atomes de carbone et le plus souvent de 6 à 25 atomes de carbone dans leur molécule.

Les composés à fonction thiol utilisés dans le cadre de la présente invention sont de préférence des alkylthiols sensiblement linéaires ayant de 5 à 30 atomes de carbone, de préférence de 6 à 25 atomes de carbone et avantageusement de 8 à 25 atomes de carbone. Ces composés préférés répondent à la formule générale (I) dans laquelle $R^8$ est un atome d'hydrogène et sont alors de préférence linéaire ou à la formule générale (I) dans laquelle $R^8$ est un groupe méthyle, $R^7$ étant dans chaque cas un groupe alkyle linéaire ou un groupe alkyle sensiblement linéaire comportant par exemple un ou plusieurs groupes méthyles et/ou éthyles latéraux.

Comme exemples spécifiques de composés à fonction thiol, utilisables dans le cadre de la présente invention, on peut citer : le méthanethiol, l'éthanethiol, le propanethiol-1 ou -2, le butanethiol-1 ou -2, le pentanethiol-1, l'hexanethiol-1 ou -2, l'heptanethiol-1 ou -2, l'octanethiol-1 ou -2, le décanethiol-1 ou -2, le dodécanethiol-1 ou -2, l'hexadécanethiol-1 ou -2, l'octadécanethiol-1 ou -2, le tétradécanethiol-1 ou -2, l'éicosanethiol-1 ou -2, le docosanethiol-1, le tétracosanethiol-1, l'hexacosanethiol-1, l'octacosanethiol-1, le méthyl-2 propanethiol-1, le méthyl-2 butanethiol-1, le méthyl-3 butanethiol-1, le méthyl-4 pentanethiol-1, l'undécanethiol-2, le tridécanethiol-2, le pentadécanethiol-2, l'heptadécanethiol-2, le nonadécanethiol-2, les esters alkyliques par exemple méthyliques, éthyliques, butyliques, éthyl-2 hexyliques, hexadécyliques et octadécyliques des acides thioglycolique, mercapto-3 propanoïque, mercapto-4 butanoïque, mercapto-5 pentanoïque et mercapto-6 hexanoïque. Il doit être entendu qu'il est possible de mettre en jeu comme composé à fonction thiol un ou plusieurs composés répondant à la formule(I) et/ou un ou plusieurs composés répondant à la formule (II).

La réaction d'addition du composé à fonction thiol sur le polyester insaturé est habituellement effectuée en présence d'un catalyseur d'addition, habituellement un catalyseur basique, par exemple une amine tertiaire. A titre d'exemples de catalyseur on peut citer la triéthylamine et la triéthylènediamine. La réaction est effectuée par addition du composé thiol au polyester insaturé dissous dans un solvant choisi par exemple parmi ceux mentionnés ci-avant pour la réaction de condensation du composé dicarboxylique sur le composé époxydé et chauffage à une température d'environ 25 à 200 °C de préférence d'environ 40 à 160 °C et par exemple à environ 60 °C, pendant un temps suffisant pour que la réaction soit substantiellement complète. La durée de la réaction entre le composé à fonction thiol et le polyester insaturé est habituellement d'environ 1 à 24 heures et le plus souvent d'environ 2 à 10 heures et par exemple environ 4 heures. La quantité de composé à fonction thiol mise en réaction est habituellement d'environ 0,2 à 1,7 mole, de préférence d'environ 0,4 à 1,2 mole et de manière la plus préférée d'environ 0,5 à 1,1 mole par mole de composé dicarboxylique mis en jeu dans la formation du polyester insaturé. La quantité de composé à fonction thiol est par exemple d'environ 1 mole pour 1 mole de composé dicarboxylique.

Les polymères modifiés de la présente invention qui peuvent être avantageusement utilisés comme additifs dans les distillats moyens du pétrole sont ceux qui comportent des chaines latérales pendantes sensiblement linéaires ayant au moins 8 atomes de carbone, de préférence au moins 10 atomes de carbone et avantageusement au moins 12 atomes de carbone, ladite chaîne pouvant comporter des atomes d'oxygène. Ces chaînes latérales peuvent provenir soit du composé époxydé utilisé dans la préparation du polyester insaturé, soit du composé à fonction thiol mis en réaction avec le polyester insaturé, soit à la fois du composé époxydé et du composé à fonction thiol.

De préférence, les polymères modifiés selon l'invention utilisés comme additifs dans les distillats moyens sont ceux qui comportent des chaînes latérales pendantes ayant au moins 8 atomes de carbone, et avantageusement au moins 10 atomes de carbone et d'une manière la plus préférée au moins 12 atomes de carbone, provenant à la fois du composé époxydé utilisé dans la préparation du polyester insaturé et du composé à fonction thiol mis en réaction avec le polyester insaturé.

Les polymères modifiés selon l'invention ont généralement une masse moléculaire en nombre d'environ 400 à 20 000 et de préférence d'environ 500 à 10 000 et le plus souvent d'environ 500 à 7 000.

Les polymères modifiés préférés selon l'invention tels qu'ils sont définis ci-dessus permettent d'avoir simultanément une amélioration du point de trouble et du point d'écoulement de distillats moyens de pétrole ce qui les rend particulièrement attractifs pour le raffineur. Les additifs sont obtenus en solution dans le solvant choisi et peuvent être utilisés sous cette forme directement dans les distillats moyens de pétrole (par exemple

dans les gazoles) dont on souhaite améliorer le point d'écoulement.

Pour observer une nette amélioration simultanée du point de trouble et du point d'écoulement des coupes de gazoles considérées dans l'invention, et définies ci-après, il est nécessaire d'ajouter ces additifs à des concentrations allant par exemple de 0,001 à 2 % en poids et de préférence de 0,01 à 1 % en poids et plus avantageusement de 0,02 à 0,3 % en poids.

Les compositions de gazoles selon l'invention comprennent une proportion majeure de distillat moyen de pétrole ayant un intervalle de distillation selon la norme de distillation ASTM D 8667 se situant entre 150 et 450 °C (fuel-oils, gazoles) et une proportion mineure, suffisante pour en abaisser simultanément le point de trouble et le point d'écoulement, d'au moins un polymère modifié défini ci-avant.

Les gazoles considérés plus particulièrement ont un intervalle de distillation allant d'une température initiale d'environ 160 à 190 °C à une température finale d'environ 360 à 430 °C.

Les compositions de gazole comprenant une proportion majeure de distillat moyen et au moins un additif choisi parmi les polymères modifiés selon l'invention, définis ci-avant, en quantité suffisante pour en abaisser le point de trouble et le point d'écoulement, peuvent également comprendre d'autres additifs tels que par exemple des additifs antioxydants, des additifs dispersant les boues, d'inhibiteurs de corrosion, etc...

Les compositions comprennent habituellement au moins 95 % et de préférence au moins 98 % en poids de distillat moyen.

L'abaissement du point d'écoulement peut aller, par exemple jusqu'à 24 °C ou plus. En outre, il est possible d'observer simultanément un abaissement du point de trouble pouvant aller, par exemple, jusqu'à 3 °C ou plus.

Les polymères modifiés utilisés dans l'invention permettent, par leur action sur les phénomènes cinétiques de cristallisation, en particulier des paraffines, et sur la modification de la taille des cristaux qui se forment, l'emploi de la suspension à une température plus basse sans bouchage des canalisations, ni colmatage des filtres. Lorsque les cristaux de paraffines dont la formation est provoquée par le refroidissement sont apparus, leur tendance naturelle est de se rassembler par gravité dans la partie basse. Ce phénomène, connu sous le terme de sédimentation, provoque le bouchage des canalisations et le colmatage des filtres et est préjudiciable à la bonne utilisation des distillats moyens et notamment des gazoles et fuels domestiques à basse température. Les polymères modifiés de l'invention diminuent la vitesse de sédimentation des paraffines formées par refroidissement des gazoles et autres distillats moyens ; les paraffines restant davantage en suspension se déposent moins sur les parois des conduites en contact avec les gazoles et autres distillats moyens, retardant ainsi le bouchage desdites conduites, et permettant d'utiliser un produit de caractéristiques données à une température nettement plus basse ou d'employer à une température donnée un produit, qui obtenu par le raffineur sans modification du schéma de distillation, n'a pas initialement les spécifications requises ; spécifications qui évoluent actuellement dans le sens d'une plus grande sévérité.

Les exemples suivants illustrent l'invention.

Dans les exemples, les coupes de gazoles utilisées sont celles qui figurent au tableau II ; elles sont caractérisées d'après la distillation ASTM D 8667; ces coupes de gazoles d'origine ARAMCO sont désignées par $G_1$ et $G_2$ ; leur masse volumique est également indiquée sur le tableau II.

Pour les coupes $G_1$ et $G_2$ sans additif et pour les compositions contenant un additif, deux déterminations ont été effectuées :

- le point de trouble suivant la norme ASTM D 2500-66
- le point d'écoulement suivant la norme ASTM D97-66.

Tableau II

| Gazoles | Distillation ASTM | | % distillé | Masse volumique |
|---|---|---|---|---|
| | Pi °C | Pf °C | à 350 °C | à 15 °C en kg/l |
| $G_1$ | 189 | 373 | 95 | 0,844 |
| $G_2$ | 177 | 373 | 92 | 0,836 |

Exemple 1 (comparatif)

On introduit dans un réacteur de 250 ml muni d'un réfrigérant et d'un système d'agitation, 14,7 g (0,15 mole) d'anhydride maléique et 50,6 g (0,15 équivalent molaire) d'époxy octadécane à 4,75 % poids d'oxygène, et 17,6 g de xylène. On porte à 60 °C, on introduit 3,82 g de titanate de n-butyle et on maintient le mélange à cette température pendant 5 heures tout en agitant. On obtient un polyester insaturé sous forme d'un produit jaune, qui peut être caractérisé par les moyens classiques d'analyses ; son spectre IR montre la disparition des bandes dues à l'anhydride maléique à 1850 $cm^{-1}$ et 1780 $cm^{-1}$ et l'apparition d'une forte bande ester à 1720 $cm^{-1}$. Sa masse moléculaire moyenne en nombre est de 2 700, sa polydispersité est de 1,67 (mesurées par Chromatographie d'Exclusion Stérique). Le polymère obtenu est dilué à 50 % en poids dans du xylène : cette solution constitue la solution-mère de l'additif A.

Exemple 2

a) On prépare de la même manière que dans l'exemple 1 la même solution dans le xylène du même polyester que celui décrit dans l'exemple 1.

b) Dans un réacteur contenant 20 g de solution (obtenue à l'étape (a)) du polyester insaturé dissous dans le xylène, on ajoute 10,7 g (0,0374 mole) de n-octadécanethiol et 15 g de xylène. On porte le mélange à 60 °C et on introduit 0,21 g de triéthylamine ($1,8.10^{-3}$mole). On maintient ensuite ce mélange à 60 °C pendant 4 heures tout en agitant. Le réaction est suivie par spectrométrie infrarouge et on note la disparition de la bande à 1640 $cm^{-1}$ correspondant à l'insaturation éthylénique du polymère. L'addition du n-octadécanethiol est confirmée par analyse du spectre de résonance magnétique nucléaire du produit obtenu.

On élimine l'excès de réactifs. La solution obtenue est diluée de façon à obtenir une solution à 50 % en poids dans le xylène, du produit, qui constitue la solution-mère de l'additif I. La masse moléculaire moyenne en nombre de l'additif I mesurée par Chromatographie d'Exclusion Stérique est de 4 200.

Exemple 3 à 5

On prépare un polyester insaturé suivant l'exemple 1 et l'on procède sur diverses parts de ce polyester insaturé à l'addition de différents mercaptans en suivant le mode opératoire décrit dans l'exemple 2(b) et en respectant les proportions molaires de l'exemple 2(b).

Exemple 3

Le mercaptan utilisé est le n-dodécyl mercaptan. Le produit obtenu, en solution dans le xylène, constitue une solution de l'additif II. L'additif II a une masse moléculaire moyenne en nombre de 3 000 (mesurée par Chromatographie d'Exclusion Stérique).

Exemple 4

Le mercaptan utilisé est le n-tétradécylmercaptan. Le produit obtenu, en solution dans le xylène, constitue une solution de l'additif III. L'additif III a une masse moléculaire moyenne en nombre de 4 000.

Exemple 5

Le mercaptan utilisé est le n-hexadécylmercaptan. Le produit obtenu, en solution dans le xylène, constitue une solution de l'additif IV.

Exemple 6

Sur une fraction aliquote d'une solution-mère du polyester insaturé, obtenue suivant le mode opératoire décrit dans l'exemple 1, on procède à l'addition d'un mélange équimolaire de n-dodécylmercaptan et de n-octadécylmercaptan en suivant le mode opératoire décrit dans l'exemple 2(b) et en respectant les proportions molaires de l'exemple 2(b). Le produit obtenu, en solution dans le xylène, constitue une solution de l'additif V.

Les additifs décrits ci-dessus sont obtenus en solution dans le xylène. La concentration des solutions est ajustée à 50 % poids de matière sèche, ce qui fournit les solutions-mères de ces additifs dont on teste l'activité en les incorporant à raison de 0,05 % en poids par rapport au gazole dont les caractéristiques ont été données dans le tableau II ci-avant.

Les résultats de ces déterminations sont rassemblés dans le tableau III ci-après. Ils montrent nettement l'amélioration simultanée du point de trouble et du point d' écoulement que permettent d'obtenir les polymères modifiés selon l'invention par rapport à un gazole sans additif.

Ces résultats montrent également que les polymères modifiés selon l'invention permettent d'améliorer le point de trouble d'un gazole ce qui ne permet pas le polyester insaturé (A) non modifié (exemple comparatif) tout en conservant une amélioration importante, et parfois supérieure, à celle obtenue avec le polyester insaturé (A) non modifié sur le point d'écoulement du gazole.

Tableau III

| Additifs % poids | Point de trouble (°C) | | Point d'écoulement (°C) | |
|---|---|---|---|---|
| | G1 | G2 | G1 | G2 |
| néant | - 1 | - 2 | - 9 | - 9 |
| 0,05 % A | - 1 | - 2 | - 18 | - 18 |
| 0,05 % I | - 4 | - 5 | - 12 | - 15 |
| 0,05 % II | - 3 | - 3 | - 27 | - 33 |
| 0,05 % III | - 3 | - 4 | - 15 | - 27 |
| 0,05 % IV | - 4 | - 4 | - 12 | - 15 |
| 0,05 % V | - 4 | - 4 | - 12 | - 15 |

## Revendications

1. Polymère de masse moléculaire moyenne en nombre d'environ 400 à 20 000 comportant des groupes thiosubstitués dans la molécule caractérisé en ce qu'il résulte de la réaction, en présence d'un catalyseur d'addition, d'au moins un composé à fonction thiol répondant à l'une des formules générales :

$$(I)\quad R^7 - \underset{\underset{R^8}{|}}{CH} - SH \qquad \text{et} \qquad (II)\quad HS - CH_2 \!-\!\left( R^9 \right)_n\!-\! COOR^{10}$$

où $R^7$ représente un atome d'hydrogène ou un groupe alkyle ayant de 1 à 59 atomes de carbone, $R^8$ représente un atome d'hydrogène ou un groupe alkyle ayant de 1 à 4 atomes de carbone, $R^9$ représente un groupe alkylène ayant de 1 à 57 atomes de carbone, n est zéro ou un et $R^{10}$ représente un groupe alkyle ayant de 1 à 58 atomes de carbone, sur un polyester insaturé résultant de la condensation d'au moins un anhydride d'acide dicarboxylique monoinsaturé ayant de 4 à 8 atomes de carbone dans sa molécule et dont l'insaturation éthylénique est

en alpha de l'un des groupes carboxyliques, sur au moins un composé époxydé aliphatique ayant de 2 à 62 atomes de carbone dans sa molécule, le rapport molaire composé epoxydé/composé dicarboxylique étant d'environ 0,4:1 à 1,8:1 et le rapport molaire composé à fonction thiol/composé dicarboxylique étant d'environ 0,2:1 à 1,7:1.

2. Polymère selon la revendication 1 dans lequel le composé dicarboxylique est choisi parmi l'anhydride maléique, l'anhydride citraconique et l'anhydride itaconique.

3. Polymère selon la revendication 1 ou 2 dans lequel le composé époxydé aliphatique est un composé monoépoxydé de formule

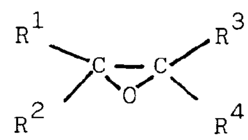

dans laquelle $R^1$ et $R^3$, identiques ou différents, représentent chacun un atome d'hydrogène ou un groupe alkyle ayant de 1 à 4 atomes de carbone, $R^2$ et $R^4$ identiques ou différents, représentent chacun un atome d'hyrogène, un groupe alkyle ayant de 1 à 60 atomes de carbone, un groupe alkoxyalkyle de formule $R^5$-O-$R^6$- dans laquelle $R^5$ représente un groupe alkyle ayant de 1 à 59 atomes de carbone et $R^6$ représente un groupe alkylène ayant de 1 à 59 atomes de carbone, $R^2$ pouvant également représenter un groupe alkoxycarbonylalkylène de formule

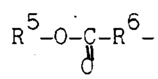

ou un groupe alkylcarbonyloxyalkylène de formule

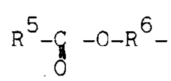

dans lesquelles $R^5$ et $R^6$ ont la définition donnée ci avant.

4. Polymère selon l'une des revendications 1 à 3 dans lequel le composé époxydé aliphatique est un monoépoxyalkane linéaire, ayant de 8 à 40 atomes de carbone dans sa molécule.

5. Polymère selon l'une des revendications 1 à 3 dans lequel le composé époxydé aliphatique est un composé de formule

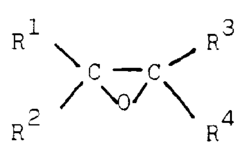

dans laquelle $R^1$ et $R^3$ représentent un atome d'hydrogène, $R^4$ est un atome d'hydrogène ou un groupe alkyle linéaire et $R^2$ est un groupe alkoxycarbonylalkylène de formule

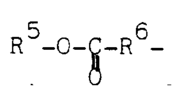

dans laquelle $R^5$ est un groupe alkyle linéaire et $R^6$ un groupe alkylène linéaire.

6. Polymère selon l'une des revendications 1 à 5 dans lequel le composé à fonction thiol est un alkylthiol linéaire ayant de 5 à 30 atomes de carbone dans sa molécule.

7. Polymère selon l'une des revendications 1 à 5 dans lequel le composé à fonction thiol est un ester alkylique de l'acide thioglycolique.

8. Polymère selon l'une des revendications 1 à 7 dans lequel le composé à fonction thiol comprend de 6 à 25 atomes de carbone dans sa molécule.

9. Composition de distillat moyen de pétrole caractérisée en ce qu'elle comprend une proportion d'au moins

95% de distillat moyen ayant un intervalle de distillation entre 150 et 450°C et une proportion de 0,001 à 2% en poids d'au moins un polymère selon l'une des revendications 1 à 8, le dit polymère comportant des chaînes latérales linéaires ayant au moins 8 atomes de carbone.

10. Composition de distillat moyen selon da revendication 9 caractérisée en ce que le distillat moyen consiste en une coupe de gazole ayant un intervalle de distillation allant d'une température initiale d'environ 160°C à 190°C à une température finale d'environ 360°C à 430°C.

11. Composition de distillat moyen selon la revendication 9 ou 10 caractérisée en ce que la proportion du polymère est de 0,02 à 0,3% en poids.

## Patentansprüche

1. Polymer mit einem zahlendurchschnittlichen Molekulargewicht von etwa 400 bis 20 000, das in seinem Molekül thiosubstituierte Gruppen aufweist, dadurch gekennzeichnet, daß es sich dabei handelt um das Produkt der Umsetzung in Gegenwart eines Additionskatalysators zwischen mindestens einer Verbindung mit Thiol-Funktion einer der allgemeinen Formeln:

(I) 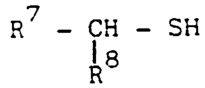 und (II) $HS-CH_2-(R^9)_n-COOR^{10}$

worin bedeuten:
$R^7$ ein Wasserstoffatom oder eine Alkylgruppe mit 1 bis 59 Kohlenstoffatomen,
$R^8$ ein Wasserstoffatom oder eine Alkylgruppe mit 1 bis 4 Kohlenstoffatomen,
$R^9$ eine Alkylengruppe mit 1 bis 57 Kohlenstoffatomen, n die Zahl 0 oder 1 und
$R^{10}$ eine Alkylgruppe mit 1 bis 58 Kohlenstoffatomen,
und einem ungesättigten Polyester, wie er erhalten wird bei der Kondensation mindestens eines einfach ungesättigten Dicarbonsäureanhydrids mit 4 bis 8 Kohlenstoffatomen in seinem Molekül, dessen ethylenische Unsättigung in α-Stellung zu einer der Carboxylgruppen angeordnet ist, und mindestens einer aliphatischen Epoxidverbindung mit 2 bis 62 Kohlenstoffatomen in ihrem Molekül,
wobei das Molverhältnis zwischen der Epoxidverbindung und der Dicarbonsäureverbindung etwa 0,4:1 bis 1,8:1 beträgt und das Molverhältnis zwischen der Verbindung mit Thiol-Funktion und der Dicarbonsäureverbindung etwa 0,2:1 bis 1,7:1 beträgt.

2. Polymer nach Anspruch 1, bei dem die Dicarbonsäureverbindung ausgewählt wird aus der Gruppe Maleinsäureanhydrid, Citraconsäureanhydrid und Itaconsäureanhydrid.

3. Polymer nach Anspruch 1 oder 2, bei dem die aliphatische Epoxidverbindung eine Monoepoxidverbindung der Formel ist

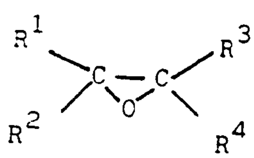

worin bedeuten:
$R^1$ und $R^3$, die gleich oder verschieden sind, jeweils ein Wasserstoffatom oder eine Alkylgruppe mit 1 bis 4 Kohlenstoffatomen,
$R^2$ und $R^4$, die gleich oder verschieden sind, jeweils ein Wasserstoffatom, eine Alkylgruppe mit 1 bis 60 Kohlenstoffatomen, eine Alkoxyalkylgruppe der Formel $R^5$-O-$R^6$-, worin $R^5$ eine Alkylgruppe mit 1 bis 59 Kohlenstoffatomen und $R^6$ eine Alkylengruppe mit 1 bis 59 Kohlenstoffatomen darstellen, wobei $R^2$ auch eine Alkoxycarbonylalkylengruppe der Formel

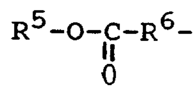

oder eine Alkylcarbonyloxyalkylengruppe der Formel

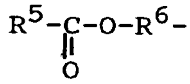

bedeuten kann, in der $R^5$ und $R^6$ wie oben angegeben definiert sind.

4. Polymer nach einem der Ansprüche 1 bis 3, in dem die aliphatische Epoxidverbindung ein lineares Monoepoxyalkan mit 8 bis 40 Kohlenstoffatomen in seinem Molekül ist.

5. Polymer nach einem der Ansprüche 1 bis 3, in dem die aliphatische Epoxidverbindung eine Verbindung der Formel ist

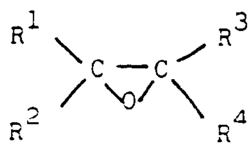

worin bedeuten:
$R^1$ und $R^3$ ein Wasserstoffatom,
$R^4$ ein Wasserstoffatom oder eine lineare Alkylgruppe und
$R^2$ eine Alkoxycarbonylalkylengruppe der Formel

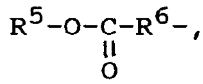

worin $R^5$ eine linare Alkylgruppe und $R^6$ eine lineare Alkylengruppe darstellen.

6. Polymer nach einem der Ansprüche 1 bis 5, in dem die Verbindung mit Thiol-Funktion ein lineares Alkylthiol mit 5 bis 30 Kohlenstoffatomen in seinem Molekül ist.

7. Polymer nach einem der Ansprüche 1 bis 5, in dem die Verbindung mit Thiolfunktion ein Alkylester der Thioglycolsäure ist.

8. Polymer nach einem der Ansprüche 1 bis 7, in dem die Verbindung mit Thiol-Funktion 6 bis 25 Kohlenstoffatome in ihrem Molekül aufweist.

9. Mittlere Erdöl-Destillatzusammensetzung, dadurch gekennzeichnet, daß sie umfaßt einen Mengenanteil von mindestens 95 Gew.-% eines mittleren Destillats mit einem Destillationsintervall zwischen 150 und 450°C und einen Mengenanteil von 0,001 bis 2 Gew.-% mindestens eines Polymers nach einem der Ansprüche 1 bis 8, wobei das Polymer lineare Seitenketten mit mindestens 8 Kohlenstoffatomen aufweist.

10. Mittlere Destillatzusammensetzung nach Anspruch 9, dadurch gekennzeichnet, daß das mittlere Destillat besteht aus einer Gasolfraktion mit einem Destillationsintervall, das reicht von einer Anfangstemperatur von etwa 160 bis 190°C bis zu einer Endtemperatur von etwa 360 bis 430°C.

11. Mittlere Destillatzusammensetzung nach Anspruch 9 oder 10, dadurch gekennzeichnet, daß der Mengenanteil des Polymers 0,02 bis 0,3 Gew.-% beträgt.

## Claims

1. Polymer of average molecular weight from about 400 to 20 000 containing thiosubstituted groups in its molecule, characterized in that it results from reaction, in the presence of an addition catalyst, of at least compound with a thiol function having one of the general formulae:

(I) 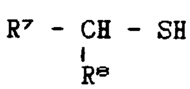 and (II) $HS - CH_2 -(R^9)_n- COOR^{10}$

in which $R^7$ represents a hydrogen atom or an alkyl group having 1 to 59 carbon atoms, $R^8$ represents a hydrogen atome or an alkyl group having 1 to 4 carbon atoms, $R^9$ represents an alkylene group having 1 to 57 carbon atoms, n is zero or one and $R^{10}$ represents an alkyl group having 1 to 58 carbon atoms, with an unsaturated polyester resulting from the condensation of at least one mono unsaturated dicarboxylic acid anhydride having 1 to 4 carbon atoms in its molecule and those ethylenic unsaturation is in the alpha position of one of

the carboxyl groups, with at least one aliphatic epoxidated compound having 2 to 62 carbon atoms in its molecule, the exposited compound/dicarboxylic compound molar ratio being about 0.4:1 to 1.8:1, and the compound with a thiol function/dicarboxylic compound molar ratio being about 0.2:1 to 1.7:1.

2. Polymer according to claim 1 wherein the dicarboxylic compound is chosen from maleic anhydride, citraconic anhydride and itaconic anhydride.

3. Polymer according to claim 1 or 2 wherein the epoxidated aliphatic compound is a monoepoxidated compound of formula

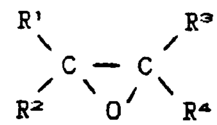

in which $R^1$ and $R^3$, identical or different, each represent a hydrogen atom or an alkyl group having 1 to 4 carbon atoms; $R^2$ and $R^4$ identical or different, each represent a hydrogen atom, an alkyl group having 1 to 60 carbon atoms, an alkoxyalkyl group of formula $R^5$-O-$R^6$- in which $R^6$ represents an alkyl group having 1 to 59 carbon atoms and $R^6$ represents an alkylene group having 1 to 59 carbon atoms, $R^2$ also possibly representing an alkoxycarbonylalkylene group of formula

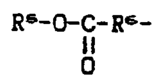

or an alkylcarbonyloxyalkylene group of formula

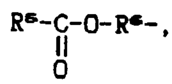

in which $R^5$ and $R^6$ each have the definition given hereinabove.

4. Polymer according to one of claims 1 to 3 wherein the aliphatic epoxidated compound is a linear monoepoxyalkane having 8 to 40 carbon atoms in its molecule.

5. Polymer according to one of claims 1 to 3 wherein the aliphatic epoxidated compound is a compound of formula:

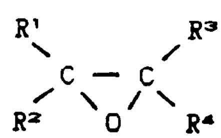

in which $R^1$ and $R^3$ represent a hydrogen atom, $R^4$ is a hydrogen atom or a linear alkyl group and $R^2$ is an alkoxycarbonylalkylene group of formula

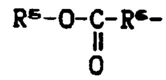

in which $R^6$ is a linear alkyl group and $R^6$ a linear alkylene group.

6. Polymer according to one of claims 1 to 5 wherein the compound with a thiol function is a linear alkylthiol having 5 to 30 carbon atoms in its molecule.

7. Polymer according to one of claims 1 to 5 wherein the compound with a thiol function is an alkyl ester of thioglycolic acid.

8. Polymer according to one of claims 1 to 7 wherein the compound with a thiol function contains 6 to 25

carbon atoms in its molecule.

9. Petroleum middle distillate composition characterized in that it comprises a proportion of at least 95% of middle distillate having a distillation range between 150 and 450° C and a minor proportion, of 0.0001 to 2% by weight of at least one polymer according to one of claims 1 to 8, said polymer containing linear side chains having at least 8 carbon atoms.

10. Middle distillate composition according to claim 9, characterized in that the middle ditillate is a gas oil cut having a distillation range from an initial temperature of about 160 to 190° C to a final temperature of about 360 to 430° C.

11. Middle distillate composition according to claim 9 or 10, characterized in that the proportion of the polymer is from 0.002 to 0.3% by weight.